# EUROPÄISCHE PATENTSCHRIFT

(11) **EP 3 801 162 B1**
(45) Veröffentlichungstag und Bekanntmachung des Hinweises auf die Patenterteilung: **29.06.2022**
(21) Anmeldenummer: 19726306.4
(22) Anmeldetag: 02.05.2019
(51) Int. Cl.: A47J 47/14, F25D 3/14

(54) **TRANSPORTBOX INSBESONDERE FÜR TEILZUBEREITETE SPEISEN**
TRANSPORT BOX, IN PARTICULAR FOR PARTIALLY PREPARED MEALS
BOÎTE DE TRANSPORT NOTAMMENT POUR REPAS PARTIELLEMENT PRÉPARÉS

(30) Priorität: 25.05.2018 DE 102018004216
(43) Veröffentlichungstag der Anmeldung: 14.04.2021
(73) Patentinhaber: MChef GmbH & Co. KG, 33602 Bielefeld (DE)
(72) Erfinder: EILERTS, Martin, 32584 Löhne (DE)
(74) Vertreter: Ellerbrächter, Dirk
(86) Internationale Anmeldenummer: PCT/EP2019/000136
(87) Internationale Veröffentlichungsnummer: WO 2019/223893

(56) Entgegenhaltungen:
- EP-A1- 0 750 732
- EP-A1- 2 988 080
- EP-A1- 3 051 238

## Beschreibung

Die vorliegende Erfindung betrifft eine Transportbox insbesondere für teilzubereitete Speisen und Lebensmittel mit wenigstens einem durch Seitenwandungen und wenigstens einen Boden begrenzten Aufnahmeraum. Wobei der Aufnahmeraum durch wenigstens einen Deckel verschließbar ist und wobei der Deckel wenigstens einen Kühlmittelraum zur Aufnahme wenigstens eines Kühlmittels aufweist und wobei das Unterteil wenigstens zwei Aufnahmeräume umfasst.

Im Stand der Technik sind verschiedene Transportboxen bekannt geworden, die die Kühlung von zu transportierenden Lebensmitteln ermöglichen. Häufig wird in solchen Transportboxen Trockeneis eingesetzt, um die Lebensmittel während des Transports auf Temperaturen unterhalb des Gefrierpunkts von Wasser halten zu können. Eine durchgängige und zuverlässige Kühlung auf einem Tiefkühlniveau kann durch solche Boxen regelmäßig nicht gewährleistet werden. Ein weiterer Nachteil ist, dass verschiedene Lebensmittel nicht unterhalb von 2 °C gelagert werden dürfen, um ein Einfrieren zu verhindern.

Aus der EP 2 988 080 A1 ist eine Transportbox mit den eingangs beschriebenen Merkmalen bekannt. Dort wird zum Verschließen der beiden Aufnahmeräume ein einziger Deckel verwendet, wobei die Wahl der Kühlung (gekühlt oder Tiefgekühlt) durch das Kühlmittel im Deckel bestimmt wird.

Es ist die Aufgabe der vorliegenden Erfindung eine besonders flexibel einsetzbare Transportbox zur Verfügung zu stellen. Diese Aufgabe wird durch eine Transportbox mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Transportbox dient insbesondere zum Transport von teilzubereiteten Speisen und Lebensmitteln. Die Transportbox umfasst wenigstens ein Unterteil mit wenigstens einem durch Seitenwandungen und wenigstens einen Boden begrenzen Aufnahmeraum. Der Aufnahmeraum ist durch wenigstens einen Deckel verschließbar. Der Deckel weist wenigstens einen Kühlmittelraum zur Aufnahme wenigstens eines Kühlmittels auf. Dabei umfasst das Unterteil wenigstens zwei Aufnahmeräume. Die Aufnahmeräume sind durch jeweils wenigstens einen Deckel verschließbar. Jeder Deckel ist in wenigstens zwei den Aufnahmeraum verschließenden Deckelstellungen anordenbar. Dabei unterscheiden sich die Deckelstellungen in einer mittels des Kühlmittels erzielbaren Kühlwirkung. Dadurch bietet die Transportbox durch die Wahl der Deckelstellungen wenigstens zwei und vorzugsweise vier verschiedene Möglichkeiten zur Temperierung.

Die erfindungsgemäße Transportbox bietet viele Vorteile. Einen erheblichen Vorteil bieten die zwei Aufnahmeräume, welche jeweils in zwei unterschiedlichen Deckelstellungen verschlossen werden können. Da durch jede Deckelstellung eine unterschiedliche Kühlwirkung erzielbar ist, ergeben sich für die erfindungsgemäße Transportbox insgesamt vier verschiedene Kombinationen von gekühlten Aufnahmeräumen. So ist die erfindungsgemäße Transportbox besonders flexibel und für viele unterschiedliche Lebensmittel einsetzbar.

Die Transportbox umfasst insbesondere zwei separate Deckel. Die Deckel sind insbesondere auf das Unterteil aufsetzbar. Bevorzugt sind die Deckel gleichartig und insbesondere identisch ausgebildet. Insbesondere sind die Deckel gleichermaßen mit einem Kühlmittel ausgestattet. Die Deckel können beide in der ersten oder in der zweiten Deckelstellung oder in unterschiedlichen Deckelstellungen angeordnet sein.

Vorzugsweise ist in der ersten Deckelstellung der Aufnahmeraum mittels wenigstens eines im Kühlmittelraum aufgenommenen Kühlmittels auf eine Tiefkühltemperatur kleiner 0 °C und insbesondere kleiner -12 °C temperierbar. Besonders bevorzugt ist in der ersten Deckelstellung der Aufnahmeraum mittels des Kühlmittels auf eine Tiefkühltemperatur zwischen -12 °C und -22 °C oder weniger temperierbar. Insbesondere beträgt die Tiefkühltemperatur weniger als -18 °C. Möglich ist auch, dass die Tiefkühltemperatur weniger als -16 °C oder auch weniger als -20 °C beträgt. Insbesondere ist in der ersten Deckelstellung der Aufnahmeraum als ein Tiefkühlraum ausgebildet. Eine solche Ausgestaltung hat den Vorteil, dass durch die erste Deckelstellung empfindliche Speisen tiefgekühlt und somit besonders haltbar transportiert werden können.

Vorzugsweise ist in der zweiten Deckelstellung der Aufnahmeraum mittels wenigstens eines im Kühlmittelraum aufgenommenen Kühlmittels auf eine Frischhaltetemperatur über 0 °C und insbesondere zwischen 0 °C und 6 °C temperierbar. Besonders bevorzugt ist in der zweiten Deckelstellung der Aufnahmeraum mittels des Kühlmittels auf eine Frischhaltetemperatur zwischen 2 °C und 6 °C und insbesondere zwischen 2 °C und 8 °C temperierbar. Solche Ausgestaltungen haben den Vorteil, dass in der zweiten Deckelstellung Speisen sicher und zuverlässig transportiert werden können, welche gekühlt, aber nicht gefroren werden dürfen. In der zweiten Deckelstellung ist der Aufnahmeraum insbesondere als ein Kühlraum bzw. Frischeraum ausgebildet.

Besonders bevorzugt ist zwischen den Aufnahmeräumen wenigstens eine gemeinsam genutzte Seitenwandung angeordnet. Die Seitenwandung weist insbesondere eine Stärke von mehr als 70 mm und vorzugsweise von mehr als 74 mm auf. Insbesondere liegt die Stärke zwischen 70 mm und 100 mm. Die Angabe der Stärke bezieht sich dabei insbesondere auf eine schwächste bzw. dünnste Stelle der Seitenwandung. Durch eine solche Seitenwandung wird ein unerwünschter Wärmeaustausch zwischen Frischhaltebereich und Tiefkühlbereich zuverlässig vermieden. Möglich ist auch eine größere oder geringere Stärke.

Insbesondere sind die Aufnahmeräume spiegelsymmetrisch ausgebildet. Insbesondere liegt eine Spiegelachse bzw. Spiegelebene zwischen den beiden Aufnahmeräumen. Insbesondere liegt die Spiegelachse bzw. Spiegelebene auf der gemeinsamen Seitenwandung. Eine solche Ausgestaltung ermöglicht eine besonders unaufwendige Fertigung der Transportbox.

Vorzugsweise weisen die Deckel jeweils wenigstens eine Griffmulde auf. Die Griffmulde ist insbesondere als eine Aussparung an einer Ecke des Deckels ausgebildet. Das ermöglicht ein besonders komfortables und leichtes Öffnen der Transportbox. Insbesondere ist die Aussparung in einer Ecke vorgesehen, welche bei einer bestimmungsgemäßen Anordnung zum Unterteil gerichtet ist. Vorzugsweise sind wenigstens zwei Griffmulden an zwei gegenüberliegenden Ecken des Deckels vorgesehen.

Es ist möglich und bevorzugt, dass wenigstens eine vertiefte und/oder erhabene Siegelfläche zum Anbringen eines Siegels vorgesehen ist. Die Siegelfläche wird insbesondere durch wenigstens einen Teilabschnitt des Unterteils und durch wenigstens einen Teilabschnitt eines Deckels bereitgestellt. Insbesondere ist für die Deckel jeweils wenigstens ein Teilabschnitt vorgesehen. Insbesondere ergänzen sich die Teilabschnitte zu einer Siegelfläche. Insbesondere ist auf die Siegelfläche ein Siegel aufklebbar. So kann bei einem unversehrten Siegel davon ausgegangen werden, dass die Lebensmittel bei einer vorgesehenen Temperierung transportiert wurden. Das gilt für eine Transportdauer von 24 Stunden.

Insbesondere ist der Deckel in einer zweiten Deckelstellung gegenüber einer ersten Deckelstellung um eine vertikale Achse gedreht. Insbesondere ist der Deckel um 180° gedreht. Das ermöglicht ein einfaches und komfortables Einstellen der gewünschten Temperierung. Möglich sind auch andere Drehwinkel.

Möglich ist auch, dass der Deckel in einer zweiten Deckelstellung gegenüber einer ersten Deckelstellung um eine horizontale Achse gewendet ist. Dabei werden insbesondere die Unterseite und die Oberseite des Deckels getauscht.

Vorzugsweise ist dem Aufnahmeraum wenigstens eine Auslassöffnung zum Abführen des Kühlmittels aus dem Aufnahmeraum zugeordnet. Besonders bevorzugt sind wenigstens zwei oder drei oder auch vier oder mehr Auslassöffnungen vorgesehen. Die Auslassöffnung ist insbesondere in der Seitenwandung angeordnet. Vorzugsweise ist die Auslassöffnung derjenigen Seitenwand angeordnet, welche mit einer Auslassnut ausgestattet ist.

Die Aufnahmeräume sind insbesondere einstückig mit dem Unterteil ausgebildet. Die Aufnahmeräume sind insbesondere unabhängig voneinander nutzbar und insbesondere nicht miteinander strömungsverbunden. Die Aufnahmeräume sind insbesondere voneinander isoliert.

Unter einer Strömung des Kühlmittels wird im Rahmen der vorliegenden Erfindung insbesondere auch eine Strömung von kalter Luft bzw. eines Gemisches aus einem gasförmigen Kühlmittel und Luft im Inneren des Aufnahmeraums bzw. in der Kanaleinrichtung verstanden.

Das im Kühlmittelraum aufnehmbare Kühlmittel ist insbesondere Trockeneis bzw. gefrorenes Kohlendioxid. Es ist möglich, dass die Transportbox wenigstens ein Kühlmittel und vorzugsweise Trockeneis umfasst. Mit Trockeneis können die zuvor beschriebenen Temperaturbereiche besonders vorteilhaft verwirklicht werden. Insbesondere wird das Trockeneis in Form von Pellets eingesetzt. Möglich ist auch die Verwendung von blockartigem Trockeneis bzw. von Trockeneisplatten. Insbesondere liegt das Kühlmittel im Kühlmittelraum in einem festen bzw. gefrorenen Zustand vor. Beim Austreten aus dem Kühlmittelraum bzw. beim Durchströmen der Kanaleinrichtung liegt das Kühlmittel insbesondere im Wesentlichen in einem gasförmigen Zustand vor.

Insbesondere ist der Kühlmittelraum dazu geeignet und ausgebildet, Trockeneis aufzunehmen. Insbesondere sind dort wenigstens 3kg Trockeneis, insbesondere in Form von 16mm Trockeneis-Pellets, lagerbar. Beispielsweise werden zur Verwirklichung der zuvor beschriebenen Tiefkühltemperatur bei kälteren Umgebungsbedingungen und insbesondere im Winter 2 kg Trockeneis-Pellets eingesetzt. Bei wärmeren Umgebungsbedingungen bzw. im Sommer wird beispielsweise 3 kg Trockeneis eingesetzt. Außerdem ist die Transportbox dazu geeignet und ausgebildet, die Frischhaltetemperatur bei Einsatz von ca. 1,2 kg Trockeneis-Pellets im Sommer und 0,8 kg im Winter zu verwirklichen.

Der Kühlmittelraum weist vorzugsweise ein Aufnahmevolumen zwischen 4 l und 7 l auf. Insbesondere weist der Kühlmittelraum ein Aufnahmevolumen zwischen 5 und 6 l auf. Beispielsweise weist der Aufnahmeraum ein Aufnahmevolumen von 5,5 l auf. Je nach Größe des Aufnahmeraums sind auch größere oder kleinere Volumen möglich.

Der Aufnahmeraum weist insbesondere ein Volumen zwischen 8 und 30 l vorzugsweise ein Volumen zwischen 14 und 20 l auf. Insbesondere weist der Aufnahmeraum ein Volumen zwischen 16 l und 18 l auf. Das Volumen kann durch die innere Ausgestaltung des Aufnahmeraums um bis zu einem Liter oder mehr schwanken. Ein solcher Aufnahmeraum kann insbesondere durch das zuvor beschriebene Kühlmittel besonders vorteilhaft auf der Tiefkühltemperatur bzw. der Frischhaltetemperatur gehalten werden. Möglich sind auch größere oder kleinere Volumen des Aufnahmeraums. Vorzugsweise sind die Menge und Art des Kühlmittels an das Volumen des Aufnahmeraums und/oder die gewünschte Tiefkühltemperatur bzw. Frischhaltetemperatur angepasst.

Die Tiefkühltemperatur und/oder die Frischhaltetemperatur können vorzugsweise für wenigstens 8 Stunden bereitgestellt werden. Vorzugsweise werden die Tiefkühltemperatur und/oder die Frischhaltetemperatur für wenigstens 12 Stunden und besonders bevorzugt für wenigstens 16 Stunden bereitgestellt. Möglich ist auch, dass die Tiefkühltemperatur und/oder die Frischhaltetemperatur für wenigstens 20 Stunden oder 22 Stunden oder auch für 24 Stunden oder mehr bereitstellbar sind.

Die Transportbox ist insbesondere aus einem Partikelschaumstoff und beispielsweise aus expandierten Polypropylen (EPP) oder wenigstens einem anderen geeigneten Material gefertigt. Insbesondere sind die den Aufnahmeraum begrenzenden Wandungen und vorzugsweise auch der Deckel aus einem solchen Werkstoff gefertigt. Insbesondere ist die Transportbox aus einem isolierenden Werkstoff gefertigt.

Die Transportbox ist insbesondere für eine passive Kühlung ausgebildet. Insbesondere ist eine passive Kühlung des Aufnahmeraums vorgesehen. Insbesondere ist eine passive Strömung des Kühlmittels durch die Kanaleinrichtung vorgesehen. Insbesondere erfolgt die Strömung des Kühlmittels aufgrund von Temperaturunterschieden im Aufnahmeraum bzw. im Deckel. In der zweiten Deckelstellung bzw. bei der Frischhaltetemperatur erfolgt die Temperierung vorzugsweise über Wärmestrahlung und/oder Wärmeleitung und insbesondere nicht über Wärmeströmung bzw. Konvektion. In der ersten Deckelstellung bzw. bei der Tiefkühltemperatur erfolgt die Temperierung vorzugsweise auch durch Wärmeströmung bzw. Konvektion.

In dem Aufnahmeraum ist insbesondere wenigstens eine Kanaleinrichtung zur Führung des Kühlmittels angeordnet. Die Kanaleinrichtung ist insbesondere dazu geeignet und ausgebildet, das Kühlmittel derart zu führen, dass der Aufnahmeraum in einer ersten Deckelstellung auf die Tiefkühltemperatur und in einer zweiten Deckelstellung auf eine Frischhaltetemperatur über 0 °C temperierbar ist.

Die Kanaleinrichtung umfasst vorzugsweise wenigstens eine Einlassnut zur Aufnahme von einem einströmenden Kühlmittel. Vorzugsweise ist die Einlassnut in wenigstens einer der Seitenwandungen angeordnet. Das bietet eine besonders vorteilhafte Führung des Kühlmittels. Die Einlassnut steht insbesondere in Strömungsverbindung mit dem Aufnahmeraum. Die Einlassnut steht in der ersten Deckelstellung insbesondere mit dem Kühlmittelraum in Strömungsverbindung. Die Einlassnut und/oder die weitere Nut sind insbesondere wenigstens abschnittsweise und vorzugsweise über ihre gesamte Länge umfänglich offen ausgebildet.

Vorzugsweise ist die Einlassnut nur an einer Seitenwandung angeordnet. Insbesondere sind die Einlassnut bzw. zwei oder eine Mehrzahl von Einlassnuten nicht an gegenüberliegenden Seitenwandungen angeordnet. Möglich ist aber auch, dass an zwei oder mehr Seitenwandungen jeweils wenigstens eine Einlassnut angeordnet ist. Durch eine solche Anordnung der Einlassnut kann die Kanaleinrichtung besonders unaufwendig verschlossen bzw. geöffnet werden, beispielsweise durch Verdrehen des Deckels.

Der Seitenwandungsabschnitt wird insbesondere durch eine Oberseite bzw. Stirnseite der Seitenwandung bereitgestellt. In einer Deckelstellung liegt der Deckel insbesondere wenigstens abschnittsweise auf dem Seitenwandungsabschnitt auf.

Es ist bevorzugt, dass in den Seitenwandungen und/oder im Boden wenigstens eine weitere Nut der Kanaleinrichtung und vorzugsweise wenigstens zwei oder eine Mehrzahl von weiteren Nuten angeordnet sind. Vorzugsweise kann das Kühlmittel über die Einlassnut und/oder die weiteren Nuten wenigstens abschnittsweise entlang von wenigstens zwei Seitenwandungen und/oder wenigstens abschnittsweise entlang des Bodens strömen. Insbesondere kann das Kühlmittel über die Einlassnut und die weiteren Nuten entlang von wenigstens zwei Seitenwandungen und entlang des Bodens strömen. Dadurch wird das Transportgut besonders umfassend umspült, sodass eine besonders gute Kühlwirkung erreicht wird.

Die weiteren Nuten umfassen insbesondere wenigstens eine Auslassnut und/oder wenigstens eine Bodennut. Die weiteren Nuten umfassen insbesondere wenigstens zwei und vorzugsweise eine Mehrzahl von Auslassnuten und/oder Bodennuten. Insbesondere ist wenigstens eine Auslassnut an wenigstens einer der Seitenwandungen angeordnet. Es ist bevorzugt, dass die Auslassnut von unten, vorzugsweise vom Boden aus, nach oben, vorzugsweise bis zu einer Oberseite der Seitenwandung, verläuft. Vorzugsweise verläuft die Auslassnut vom Boden bis zu einer Oberseite der Seitenwandung und insbesondere über die gesamte Seitenwandung. Insbesondere ist der Seitenwandung mit der Auslassnut wenigstens eine Auslassöffnung zugeordnet, durch welche das Kühlmittel den Aufnahmeraum verlassen kann.

Insbesondere ist in dem Boden wenigstens eine Bodennut angeordnet. Insbesondere erstreckt sich die Bodennut von einer Seitenwandung bis zu einer anderen Seitenwandung und vorzugsweise zu einer gegenüberliegenden Seitenwandung. Besonders bevorzugt verbindet die Bodennut die Einlassnut und die Auslassnut miteinander.

In einer vorteilhaften Ausgestaltung werden die weiteren Nuten durch wenigstens vier Auslassnuten und wenigstens acht Bodennuten bereitgestellt. Vorzugsweise treffen ein Teil der Bodennuten auf eine Auslassnut und ein anderer Teil der Bodennuten auf eine Seitenwandung. Beispielsweise trifft die Hälfte der Bodennuten auf eine Auslassnut und die andere Hälfte auf eine Seitenwandung. Eine solche Ausgestaltung bietet eine besonders vorteilhafte Führung des Kühlmittels. Möglich ist auch, dass alle Bodennuten auf wenigstens eine Auslassnut treffen. Insbesondere werden die weiteren Nuten durch wenigstens eine Auslassnut und/oder wenigstens eine Bodennut bereitgestellt. Es können auch wenigstens zwei Auslassnuten und/oder wenigstens zwei Bodennuten vorgesehen sein. Es ist möglich, dass fünf oder sechs oder mehr Auslassnuten vorgesehen sind. Möglich ist auch, dass acht oder neun oder zehn oder mehr Bodennuten vorgesehen sind.

Die Einlassnut trifft insbesondere auf wenigstens zwei Bodennuten. Dazu ist die Einlassnut vorzugsweise so breit ausgebildet, dass sie wenigstens zwei Bodennuten abdeckt. Durch eine solche Ausgestaltung wird eine besonders günstige Konvektion im Aufnahmeraum erreicht. Es ist möglich, dass eine Mehrzahl von Einlassnuten vorgesehen ist. Dann treffen vorzugsweise alle Einlassnuten auf wenigstens eine Bodennut und insbesondere auf jeweils wenigstens zwei Bodennuten.

Die Einlassnut und die Auslassnut sind insbesondere an gegenüberliegenden Seitenwänden angeordnet. Es ist bevorzugt, dass bei einer Drehung des Deckels um 180° die Durchlassöffnung von der Einlassnut zu einem neben der Auslassnut liegenden Seitenwandungsabschnitt bzw. zu einem zwischen wenigstens zwei Auslassnuten liegenden Seitenwandungsabschnitt bewegt wird. So wird die Verbindung der Kanaleinrichtung bzw. der Einlassnut zum Kühlmittelraum bei einer entsprechenden Drehung des Deckels durch den Seitenwandungsabschnitt verschlossen.

In einer bevorzugten Ausgestaltung sind eine Mehrzahl von Einlassnuten und Auslassnuten und Bodennuten vorgesehen. Die Einlassnuten und die Bodennuten sind insbesondere nur an jeweils einer Seitenwandung vorgesehen. Möglich ist aber auch, dass die Einlassnuten und Auslassnuten über zwei oder mehr Seitenwandungen verteilt sind. Insbesondere sind die Einlassnuten und die Auslassnuten an gegenüberliegenden Seitenwänden vorgesehen. Besonders bevorzugt sind einer Einlassnut wenigstens zwei Bodennuten und/oder Auslassnuten zugeordnet.

Die weiteren Nuten weisen vorzugsweise wenigstens teilweise eine Tiefe und/oder Breite von wenigstens 6 mm auf. Bevorzugt weisen die weiteren Nuten wenigstens teilweise eine Querschnittsfläche von wenigstens 36 mm² auf. Insbesondere weisen die weiteren Nuten wenigstens eine Tiefe und/oder Breite von wenigstens 7 mm und/oder eine Querschnittsfläche von wenigstens 49 mm² auf. Besonders bevorzugt weisen die weiteren Nuten wenigstens teilweise eine Tiefe und/oder eine Breite von wenigstens 10 mm auf. Es konnte gezeigt werden, dass durch solche Nuten eine besonders günstige Konvektion bzw. Wärmeströmung auftritt, sodass die Lebensmittel optimal vom Kühlmittel umspült werden. Möglich sind auch kleinere oder größere Nuten. Insbesondere weisen die weiteren Nuten die zuvor beschriebenen Abmessungen über mehr als die Hälfte ihrer Länge und vorzugsweise über ihre gesamte Länge auf.

Insbesondere weisen die weiteren Nuten jeweils eine geringere Querschnittsfläche als eine einzelne Einlassnut auf. Insbesondere ist die weitere Nut schmaler und/oder flacher als die Einlassnut ausgebildet.

Insbesondere verläuft die Einlassnut von einer Oberseite der Seitenwandung in Richtung des Bodens und vorzugsweise bis zum Boden. Insbesondere verläuft die Einlassnut über die gesamte Seitenwandung. Dadurch kann das Transportgut besonders günstig umströmt werden.

Die Einlassnut weist vorzugsweise eine Breite von wenigstens 40 mm auf. Möglich ist auch, dass die Kanaleinrichtung eine Mehrzahl von Einlassnuten umfasst und dass wenigstens ein Teil der Einlassnuten jeweils breiter als die zwischen ihnen liegenden Wandabschnitte ausgebildet sind. Vorzugsweise beträgt die Breite der Einlassnut wenigstens 50 mm. Insbesondere beträgt die Breite der Einlassnut weniger als 100 mm. Es kann auch einer größere oder geringere Breite vorgesehen sein. Vorzugsweise beträgt die Tiefe der Einlassnut wenigstens 6 mm und vorzugsweise wenigstens 7 mm und besonders bevorzugt wenigstens 10 mm. Möglich ist auch eine größere oder geringere Tiefe. Es hat sich in Versuchen herausgestellt, dass derart ausgestaltete Einlassnuten für die vorgesehenen Temperaturbereiche von besonderem Vorteil sind.

Die zwischen den Einlassnuten liegenden Wandabschnitte sind insbesondere als Stege ausgebildet. Durch solche Stege kann das Transportgut besonders vorteilhaft von den Einlassnuten beabstandet werden.

In einer besonders bevorzugten Ausgestaltung umfasst die Kanaleinrichtung eine Mehrzahl von Einlassnuten. Dabei sind die Einlassnuten insbesondere nur an einer Seitenwandung des Aufnahmeraums angeordnet. So kann eine vorteilhafte Umströmung der Lebensmittel und zugleich eine besonders unaufwendige Verwirklichung der Deckelstellungen erreicht werden. An der einen Seitenwandung sind insbesondere wenigstens zwei und vorzugsweise wenigstens drei und besonders bevorzugt wenigstens vier Einlassnuten vorgesehen. Die Einlassnuten können auch an wenigstens zwei Seitenwandungen angeordnet sein.

Insbesondere umfasst die Kanaleinrichtung wenigstens zwei Einlassnuten und vorzugsweise wenigstens drei oder wenigstens vier Einlassnuten und besonders bevorzugt wenigstens fünf Einlassnuten. Möglich sind auch sechs oder sieben oder mehr Einlassnuten. In Verbindung mit den zuvor beschriebenen Ausgestaltungen der Transportbox haben sich fünf Einlassnuten als besonders vorteilhaft zum Erzielen einer möglichst günstigen Kühlmittelströmung im Aufnahmeraum erwiesen. Die zuvor genannten Zahlen betreffen insbesondere eine Anordnung der Einlassnuten an einer Seitenwandung. Bei einer Anordnung der Einlassnuten an zwei oder mehr Seitenwandungen sind insbesondere entsprechend mehr Einlassnuten vorgesehen.

Insbesondere trifft jede Einlassnut auf wenigstens eine Bodennut und vorzugsweise auf wenigstens zwei Bodennuten. Es ist möglich, dass nur ein Teil der Bodennuten auf eine Auslassnut trifft. Insbesondere trifft nur ein Teil der Bodennuten auf eine Auslassnut. Insbesondere trifft ein anderer Teil der Bodennuten direkt auf eine Seitenwandung. Möglich ist auch, dass alle Boden Nuten auf eine oder mehrere Auslassnuten treffen.

Der Aufnahmeraum dient vorzugsweise zur Aufnahme von wenigstens einer und besonders bevorzugt von wenigstens zwei oder mehr Umverpackungen von Speisen. Die Speisen können dabei auf Geschirreinheiten angeordnet sein. Die Umverpackungen können auch Getränke bzw. Getränkeflaschen enthalten. Durch solche Umverpackungen können der Aufnahmeraum optimal gefüllt und die Strömungseigenschaften der Nuten vorteilhaft genutzt werden. Es ist möglich, dass die Transportbox wenigstens eine Umverpackung umfasst, welche vorzugsweise alleine oder in Kombination mit weiteren Umverpackungen den Aufnahmeraum bis auf die Nuten und/oder Griffmulden im Wesentlichen ausfüllt. Insbesondere sind die Umverpackungen an die Länge und/oder Breite und/oder Höhe des Aufnahmeraums angepasst. Die Umverpackung ist insbesondere quaderförmig oder würfelförmig ausgebildet.

Die Kanaleinrichtung und der Kühlmittelraum sind insbesondere über wenigstens eine Strömungsverbindung für das Kühlmittel verbindbar. Vorzugsweise ist in der ersten Deckelstellung die Strömungsverbindung wenigstens teilweise geöffnet und insbesondere weiter geöffnet als in der zweiten Deckelstellung. Vorzugsweise ist in der zweiten Deckelstellung ist die Strömungsverbindung geschlossen oder weniger weit geöffnet als in der ersten Deckelstellung. So ist durch die Wahl der Deckelstellung eine Freigabe bzw. Unterbindung der Kühlmittelströmung einstellbar, um dadurch den Aufnahmeraum unterschiedlich zu temperieren.

In einer besonders bevorzugten Ausgestaltung umfasst die Strömungsverbindung für das Kühlmittel wenigstens eine im Deckel angeordnete Durchgangsöffnung oder ist als eine solche ausgebildet. Es ist bevorzugt, dass in der ersten Deckelstellung die Durchgangsöffnung wenigstens teilweise überlappend zu der Einlassnut angeordnet ist und insbesondere mit der Einlassnut weiter überlappt als in der zweiten Deckelstellung. Bevorzugt ist auch, dass in der zweiten Deckelstellung die Durchgangsöffnung durch wenigstens einen Seitenwandungsabschnitt des Aufnahmeraums wenigstens teilweise verschlossen ist und insbesondere mit dem Seitenwandungsabschnitt weiter überlappt als in der ersten Deckelstellung. Insbesondere ist in der zweiten Deckelstellung die Durchgangsöffnung durch den Seitenwandungsabschnitt vollständig verschlossen. Es ist möglich, dass in der ersten Deckelstellung die gesamte Durchgangsöffnung überlappend zu der Einlassnut angeordnet ist. Möglich ist auch, dass in der ersten Deckelstellung nur ein Teil der Durchgangsöffnung überlappend zu der Einlassnut angeordnet ist.

Eine solche Ausgestaltung bietet viele Vorteile und ermöglicht eine besonders unaufwendige und zugleich sehr verlässliche Freigabe bzw. Unterbindung der Kühlmittelströmung in Abhängigkeit der Deckelstellung. Viele Vorteile bietet auch die Einlassnut. So ist z. B. die Strömung des Kühlmittels auch dann nicht unterbrochen, wenn der Aufnahmeraum mit Transportgut gefüllt ist, welches unmittelbar bzw. eng an den Seitenwänden anliegt.

Die Durchgangsöffnung erstreckt sich insbesondere zwischen dem Kühlmittelraum und einer Unterseite des Deckels. Vorzugsweise ist die Durchgangsöffnung nur entlang einer Seitenkante der Unterseite des Deckels angeordnet. Die Durchgangsöffnung kann sich auch entlang von zwei oder mehr Seitenkanten erstrecken. Dann sind insbesondere zwei oder eine Mehrzahl von Durchgangsöffnungen vorgesehen.

Weitere Vorteile und Merkmale der vorliegenden Erfindung ergeben sich aus den Ausführungsbeispielen, welche im Folgenden mit Bezug auf die beiliegenden Figuren erläutert werden.

Es zeigen:
- Figur 1: eine rein schematische Darstellung einer erfindungsgemäßen Transportbox in einer perspektivischen Ansicht von schräg oben;
- Figur 2: die Transportbox mit einem abgenommenen Deckel;
- Figur 3: die Transportbox mit abgenommenem Deckel in einer Draufsicht;
- Figur 4: der Deckel in einer perspektivischen Ansicht von schräg oben;
- Figur 5: die Unterseite des Deckels in einer perspektivischen Ansicht von schräg oben;
- Figur 6: ein Deckel für einen Kühlmittelraum des Deckels;
- Figur 7: eine teilweise transparente Darstellung der Transportbox in einer ersten Deckelstellung in einer Draufsicht; und
- Figur 8: eine teilweise transparente Darstellung der Transportbox in einer zweiten Deckelstellung in einer Draufsicht.

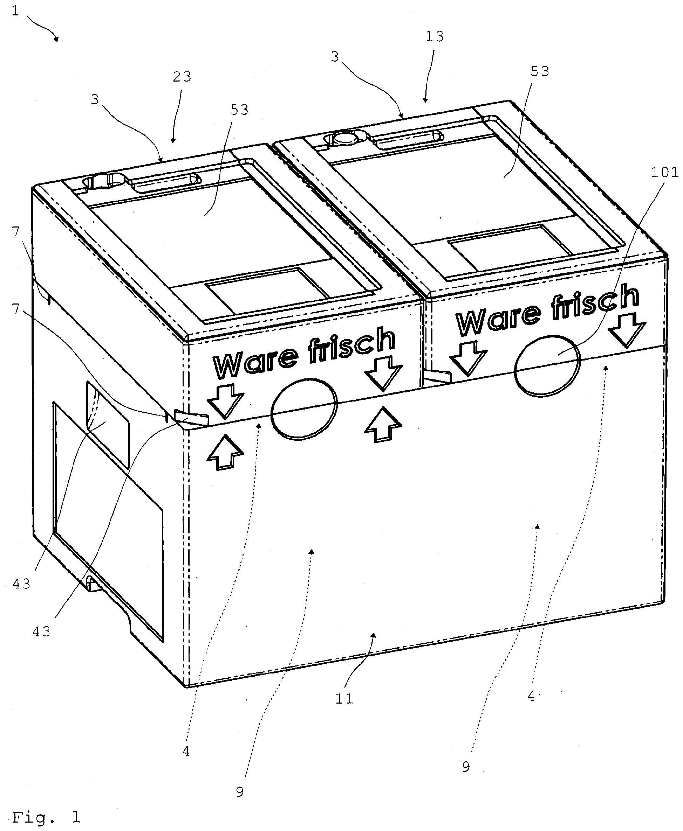

Die Figur 1 zeigt eine erfindungsgemäße Transportbox1 mit einem Unterteil 11 und einem auf dem Unterteil 11 angeordnetem Deckel 3. Das Unterteil 11 stellt hier zwei Aufnahmeräume 2 bereit. Dabei ist jeder Aufnahmeraum 2 durch einen separaten Deckel 3 verschließbar.

Das Unterteil 11 weist Seitenwandungen 12 und einen Boden 22 auf, welche die Aufnahmeräume 2 begrenzen. Zwischen den Aufnahmeräumen 2 ist eine von beiden Aufnahmeräumen 2 gemeinsam genutzte Seitenwandung 8 angeordnet.

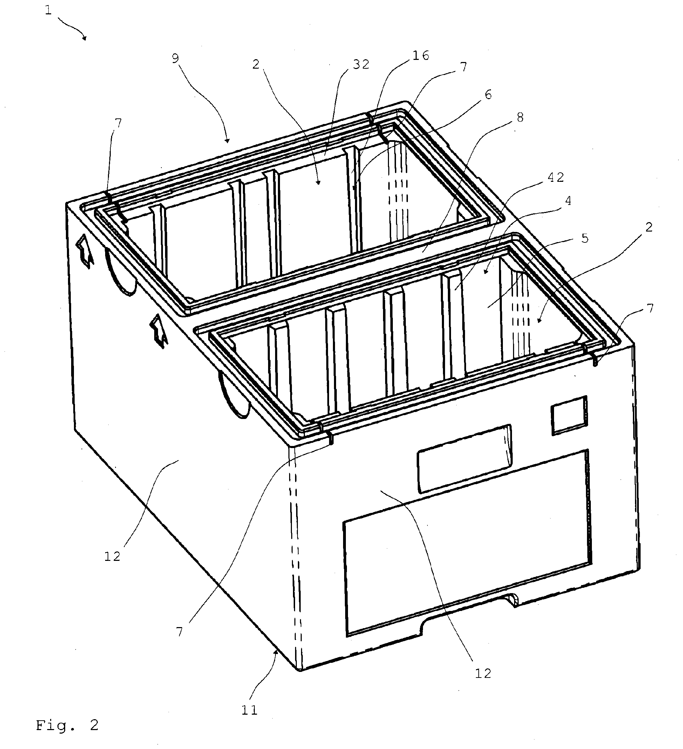

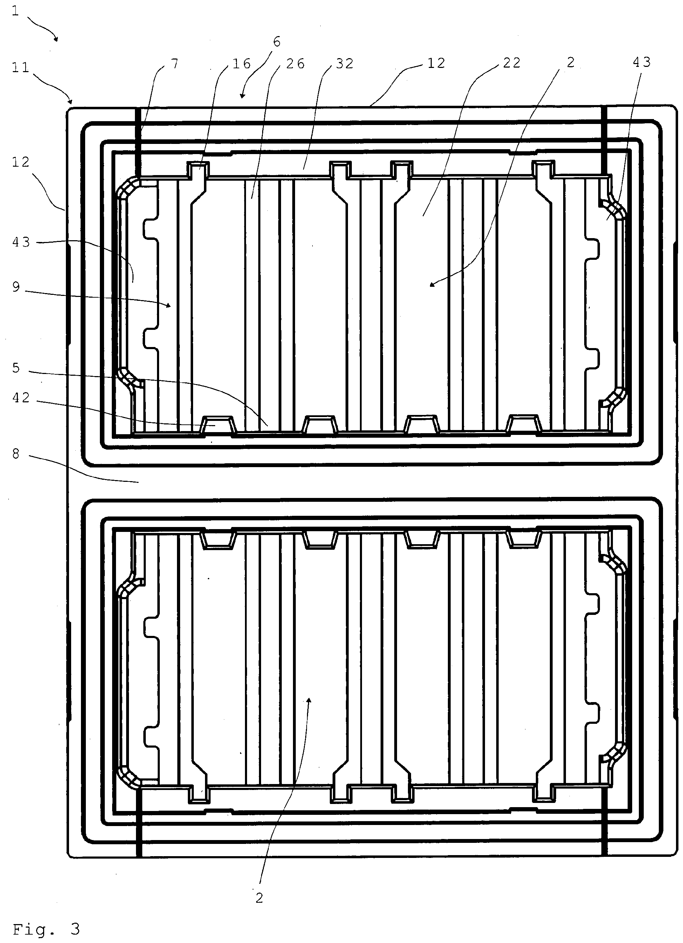

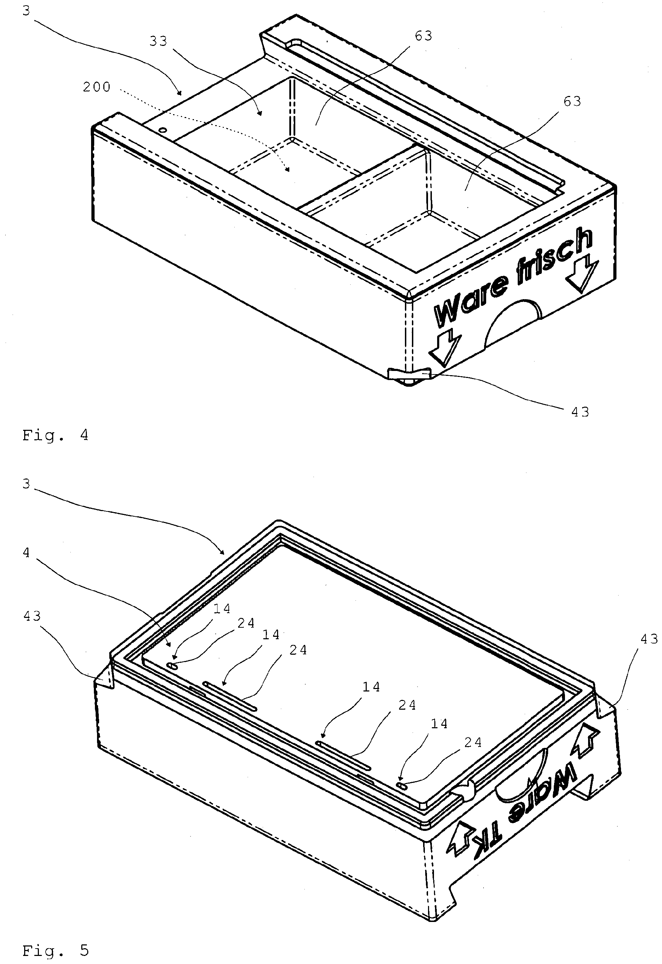

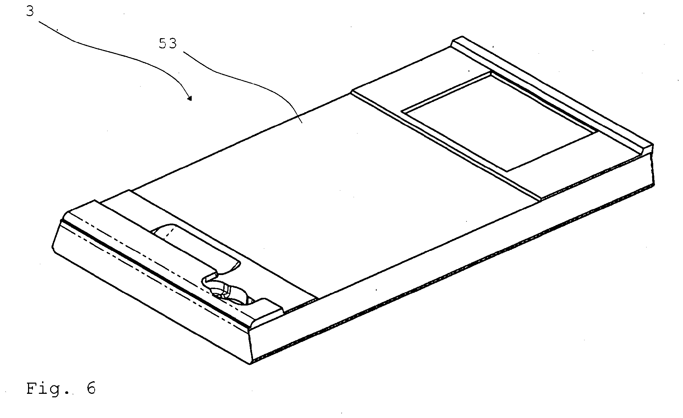

Im Folgenden wird die Transportbox 1 nun mit Bezug zu den Figuren 1 bis 8 näher beschrieben. Das Unterteil 11 wird in den Figuren 2 und 3 näher gezeigt. Darstellungen des Deckels 3 sind in den Figuren 4 bis 6 zu finden.

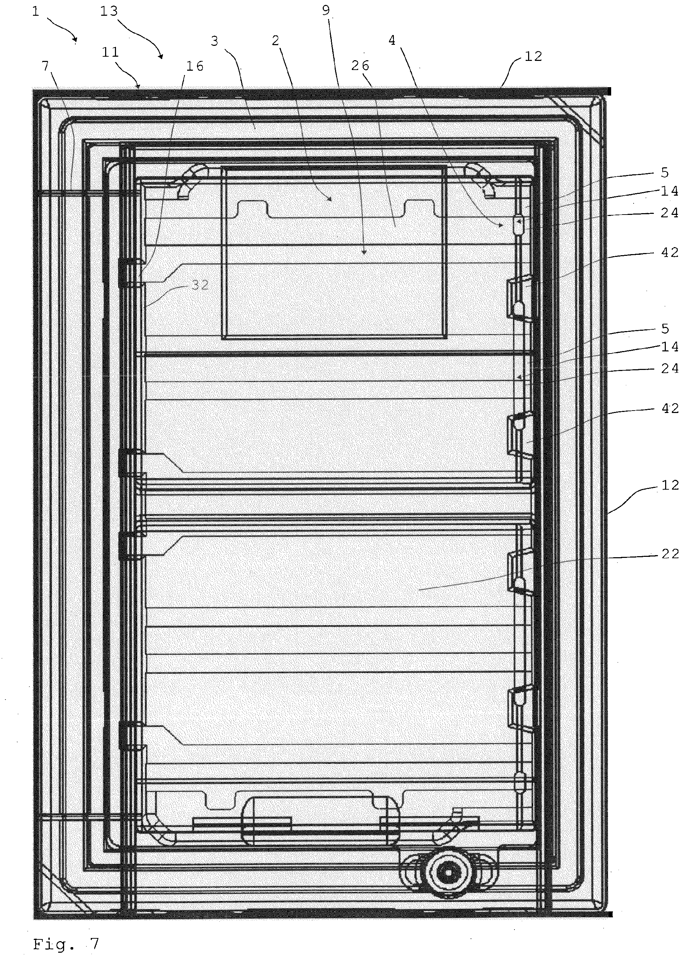

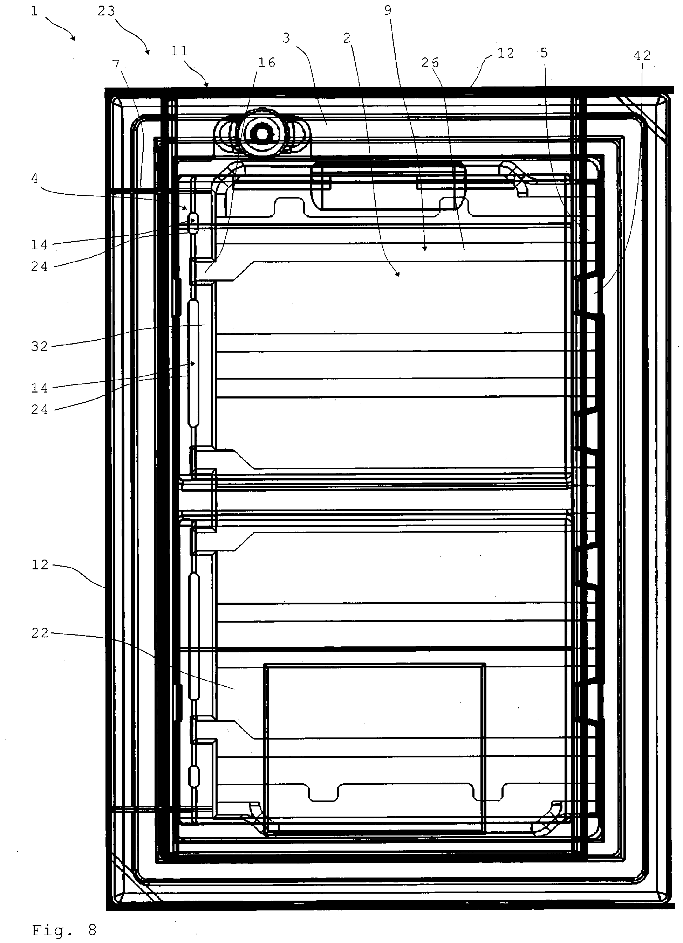

Die Deckel 3 können hier in zwei unterschiedlichen Deckelstellungen 13, 23 auf das Unterteil 11 aufgesetzt werden. Die Deckelstellungen sind den Figuren 7 und 8 näher gezeigt.

Im Deckel 3 befindet sich ein Kühlmittelraum 33 zur Aufnahme eines hier nicht näher dargestellten Kühlmittels 200, beispielsweise Trockeneis bzw. gefrorenes Kohlendioxid. Insbesondere werden 16 mm Trockeneis-Pellets eingesetzt. Wenn das Trockeneis sublimiert, kann das gasförmige Kohlendioxid über eine nachfolgend näher beschriebene Strömungsverbindung 4 in den Aufnahmeraum 2 eintreten. Im Aufnahmeraum 2 wird das Kühlmittel 200 mittels einer Kanaleinrichtung 9 gezielt geführt, um eine für die gewünschte Temperierung optimale Wärmeströmung zu erreichen.

Der Kühlmittelraum 33 umfasst hier zwei Kühlmittelbereiche 63, zwischen denen sich eine Trennwand erstreckt. Zum Verschließen des Kühlmittelraums 33 ist ein Deckel 53 vorgesehen, welcher hier als ein Einschubdeckel ausgebildet ist. Zum Verschließen wird der Deckel 53 in seitliche Nuten des Deckels 3 eingeschoben. Vorzugsweise wird der Deckel 53 zusätzlich verriegelt, sodass ein unbeabsichtigtes Öffnen des Kühlmittelraums 33 verhindert wird.

Zwischen den Deckeln 3 und den Aufnahmeräumen 2 ist hier jeweils eine öffenbare bzw. verschließbare Strömungsverbindung 4 vorgesehen. Über die Strömungsverbindung 4 kann das in die Gasphase übergegangene Trockeneis den Kühlmittelraum 33 verlassen und in den Aufnahmeraum 2 eintreten. Die Strömungsverbindungen 4 werden hier durch Durchgangsöffnungen 14 bereitgestellt. Bei den hier gezeigten Deckeln 3 sind jeweils vier als Langlöcher 24 ausgebildete Durchgangsöffnungen 14 vorgesehen. Dabei sind für jeden Deckel 3 jeweils zwei längere Langlöcher 24 und jeweils zwei kürzere Langlöcher 24 vorgesehen.

Je nach Deckelstellung 13, 23 können die Aufnahmeräume 2 durch das im Deckel 3 aufgenommene Kühlmittel 200 unterschiedlich temperiert werden.

In der ersten Deckelstellung 13 ist die Strömungsverbindung 4 freigegeben, sodass das Kühlmittel 200 in den Aufnahmeraum 2 einströmen kann. Dazu umfassen die Aufnahmeräume 2 hier jeweils eine Kanaleinrichtung 9 mit jeweils fünf Einlassnuten 5. Die Einlassnuten 5 sind hier in die gemeinsame Seitenwandung 8 eingearbeitet. Die Langlöcher 24 sind in der ersten Deckelstellung 13 überlappend zu den Einlassnuten 5 angeordnet. Die überlappende Anordnung ist in der Figur 7 besonders gut zu erkennen. Es kann vorgesehen sein, dass eine Einlassnut 5 nicht mit den Langlöchern 24 überlappt.

Für die zweite Deckelstellung 23 wird der Deckel 3 aus der ersten Deckelstellung 13 um 180° gedreht. In dieser Deckelstellung 23 überlappen die Langlöcher 24 nicht mehr mit den Einlassnuten 5 und die Strömungsverbindung 4 ist verschlossen. Diese Anordnung ist in der Figur 8 besonders gut zu erkennen.

In der Seitenwandung 12, welche der Seitenwandung 8 mit den Einlassnuten 5 gegenüberliegt, sind hier Seitenwandungsabschnitte 32 vorgesehen. In der zweiten Deckelstellung 23 liegen die Langlöcher 24 über den Seitenwandungsabschnitten 32 und sind durch diese verschlossen.

Damit sich das in die Einlassnuten 5 eingeströmte Kühlmittel 200 im Aufnahmeraum 2 besonders gleichmäßig und gezielt verteilen kann, sind weitere Nuten 6 vorgesehen. Als weitere Nuten 6 sind hier im Boden 22 angeordnete Bodennuten 26 vorgesehen. Zudem sind in die Seitenwandung 12, welche den Einlassnuten 5 gegenüberliegt, als Auslassnuten 16 ausgebildete Nuten 6 eingearbeitet. So kann das Kühlmittel 200 bzw. die kalte Luft durch die Einlassnuten 5 nach unten strömen und von dort über den Boden 22 zur gegenüberliegenden Seitenwandung 12. Von dort steigt das Kühlmittel 200 bzw. die kalte Luft wieder nach oben auf und kann über Auslassöffnungen 7 in die Umgebung der Transportbox 1 austreten. Durch die hier gezeigten Nuten 5, 6 wird eine besonders vorteilhafte Führung des Kühlmittels 200 bzw. der kalten Luft erreicht.

Für jeden Aufnahmeraum 2 sind hier jeweils zwei Auslassöffnungen 7 vorgesehen. Die Auslassöffnungen 7 sind hier in dem Unterteil 11 angeordnet. Beispielsweise sind die Auslassöffnungen 7 als schlitzartige Vertiefungen an einer Oberseite derjenigen Seitenwandung 12 angeordnet, in welcher auch die Auslassnuten angeordnet sind. So kann das Kühlmittel 200 zwischen Unterteil 11 und Deckel 3 austreten.

Mit der hier gezeigten Transportbox 1 wird der Aufnahmeraum 2 in der ersten Deckelstellung 13 mittels des Kühlmittels 200 auf eine Tiefkühltemperatur von kleiner minus 12° und beispielsweise auf minus 18° oder weniger temperiert. Dazu werden im Deckel 3 beispielsweise 2 bis 3 kg Trockeneis-Pellets eingesetzt, je nach Außentemperaturen.

Durch die hier gezeigte Ausgestaltung und Anordnung der Einlassnuten 5 und der weiteren Nuten 6 kann die Tiefkühltemperatur mit einer solchen Menge Trockeneis zuverlässig eingestellt werden. Beispielsweise ist so eine Temperierung des Aufnahmeraums 2 über wenigstens 24 Stunden oder sogar bis zu 30 Stunden möglich. Dies ist eine Anforderung, die für übliche Transportwege und -bedingungen unbedingt einzuhalten ist.

Um die transportierten Lebensmittel besonders gut mit dem Kühlmittel 200 bzw. mit kalter Luft umspülen zu können und die Tiefkühltemperatur zuverlässig einzuhalten, sind die Einlassnuten 5 und die weiteren Nuten 6 hier gezielt aufeinander abgestimmt. Beispielsweise weisen die weiteren Nuten 6 eine Tiefe von 10 mm und eine Breite von 10 mm auf. Das hat sich für eine optimale Konvektion als besonders vorteilhaft ausgestellt.

Zudem sind die Einlassnuten 5 hier entsprechend breit ausgebildet. Beispielsweise weisen die Einlassnuten 5 eine Breite von mehr als 40 mm auf. Zudem sind die Einlassnuten 5 hier breiter als die zwischen ihnen liegenden Wandabschnitte 42 ausgebildet. So wird eine besonders gute Konvektion erreicht. Zudem halten die Wandabschnitte 42 das Transportgut auf Abstand, sodass die Strömungswege nicht versperrt werden. Das ist besonders vorteilhaft, wenn die Lebensmittel in quaderförmigen bzw. würfelförmigen Umverpackungen transportiert werden.

Durch das hier gezeigte Verschließen der Strömungsverbindung 4 wird in der zweiten Deckelstellung 23 der Aufnahmeraum 2 mittels des Kühlmittels 200 auf eine Frischhaltetemperatur zwischen 0 °C und 6 °C temperiert. Dazu muss in den Kühlmittelraum lediglich eine Menge von 0,8 kg bis 1,2 kg Trockeneis-Pellets, je nach Außentemperatur, eingefüllt werden. Durch das Verschließen der Langlöcher 24 mit den jeweiligen Seitenwandungsabschnitten 32 gelangt kein Kühlmittel 200 mehr in den Aufnahmeraum 2. Die Temperierung erfolgt in der zweiten Deckelstellung 23 somit nicht mehr durch Konvektion bzw. Wärmeströmung, sondern nur noch durch Wärmestrahlung und Wärmeleitung.

Durch die zwei Aufnahmeräume 2 in der Transportbox 1 ergeben sich somit vier Möglichkeiten zur Temperierung. Es können beide Aufnahmeräume 2 auf Frischhaltetemperatur oder beide Aufnahmeräume 2 auf Tiefkühltemperatur eingestellt werden. Oder der linke Aufnahmeraum 2 ist auf Frischhaltetemperatur und der rechte Aufnahmeraum 2 auf Tiefkühltemperatur eingestellt oder umgekehrt.

Zum zuverlässigen Einhalten der Frischhaltetemperatur sind die Deckel 3 hier jeweils mit einem Boden mit einer Stärke von 15 mm ausgestattet. Dadurch kann die Frischhaltetemperatur mit der oben beschriebenen Menge an Trockeneis zuverlässig über wenigstens 12 Stunden oder auch bis zu 24 Stunden oder mehr sicher eingehalten werden.

Ein besonderer Vorteil der hier vorgestellten Transportbox 1 ist, dass die beiden Aufnahmeräume 2 einfach und unaufwendig unterschiedlich temperiert werden können. Beispielsweise wird ein Deckel 3 in der ersten Deckelstellung 13 aufgesetzt, sodass die Tiefkühltemperatur eingestellt ist. Wird der andere Deckel 3 in der zweiten Deckelstellung 23 aufgesetzt, ist der andere Aufnahmeraum 2 auf die Frischhaltetemperatur eingestellt. So können mit der Transportbox 1 sowohl tiefgekühlte Lebensmittel als auch frostempfindliche Lebensmittel transportiert werden. Um einem Wärmeübergang zwischen den Aufnahmeräumen 2 zu vermeiden, ist die gemeinsame Seitenwandung 8 hier wenigstens 70 mm und beispielsweise 74 mm stark.

Um das Abnehmen der Deckel 3 zu erleichtern, sind hier Griffmulden 43 vorgesehen. Dazu sind hier an zwei gegenüberliegenden Ecken des Deckels 3 Aussparungen angeordnet. Dadurch können die Finger besonders gut in die Griffmulde 43 eingelegt werden, um den Deckel 3 vom Unterteil 11 abzuheben.

Um das Tragen der Transportbox 1 zu erleichtern, ist das Unterteil 11 mit zwei gegenüberliegenden Griffmulden 43 ausgestattet. Auch im Inneren der Aufnahmeräume 2 sind Griffmulden 43 vorgesehen. So können quaderförmige bzw. würfelförmige Umverpackungen und z. B. Boxen besonders gut aus dem Aufnahmeraum 2 entnommen werden. Die Griffmulden 43 im Aufnahmeraum 2 sind hier an denjenigen Seitenwandungen 12 angeordnet, welche keine Nuten 5, 6 aufweisen.

Wie in den Figuren 1 und 5 zu erkennen, sind die Deckel 3 an jeweils einer Seite mit der Aufschrift "Ware frisch" und an einer gegenüberliegenden Seite mit der Aufschrift "Ware TK" gekennzeichnet. Zudem sind unter den Schriftzügen jeweils zwei Blockpfeile vorgesehen. Wie in der Figur 1 zu erkennen, ist auch das Unterteil 11 der Transportbox 1 mit Blockpfeilen gekennzeichnet. Dabei sind die Schriftzüge auf dem Deckel 3 so angeordnet, dass sie die Deckelstellung 13, 23 beschreiben, wenn die Blockpfeile von Deckel 3 und Unterteil 11 in Übereinstimmung gebracht sind. So einfach und zuverlässig erkannt werden, ob der Deckel 3 in der ersten Deckelstellung 13 ("Ware TK") oder in der zweiten Deckelstellung 23 zum Frischhalten ("Ware frisch") positioniert ist.

Um eine Unversehrtheit der Waren garantieren zu können und ein nachträgliches Verändern der Deckelstellungen 13, 23 zu verhindern, sind die Deckel 3 und das Unterteil 11 hier mit einer vertieften Siegelfläche 101 ausgestattet. In dem hier gezeigten Beispiel ergänzen sich die Siegelflächen 101 von Deckel 3 und Unterteil 11 zu einem Kreis, auf den dann zum Beispiel ein entsprechend kreisförmiges Siegel aufgeklebt werden kann. Ein Öffnen bzw. Verdrehen des Deckels 3 führt dann automatisch zu einer Verletzung des Siegels.

### Bezugszeichenliste

- 1: Transportbox
- 2: Aufnahmeraum
- 3: Deckel
- 4: Strömungsverbindung
- 5: Einlassnut
- 6: Nut
- 7: Auslassöffnung
- 8: Seitenwandung
- 11: Unterteil
- 12: Seitenwandung
- 13: Deckelstellung
- 14: Durchgangsöffnung
- 22: Boden
- 23: Deckelstellung
- 24: Langloch
- 32: Seitenwandungsabschnitt
- 33: Kühlmittelraum
- 42: Wandabschnitt
- 43: Griffmulde
- 53: Deckel
- 63: Kühlmittelbereich
- 101: Siegelfläche
- 200: Kühlmittel

## Patentansprüche

1. Transportbox (1), insbesondere für teilzubereitete Speisen und Lebensmittel, mit wenigstens einem Unterteil (11) mit wenigstens einem durch Seitenwandungen (12) und wenigstens einen Boden (22) begrenzten Aufnahmeraum (2), wobei der Aufnahmeraum (2) durch wenigstens einen Deckel (3) verschließbar ist und wobei der Deckel (3) wenigstens einen Kühlmittelraum (33) zur Aufnahme wenigstens eines Kühlmittels (200) aufweist, und wobei das Unterteil (11) wenigstens zwei Aufnahmeräume (2) umfasst,
**dadurch gekennzeichnet,**
**dass** die Aufnahmeräume (2) durch jeweils wenigstens einen Deckel (3) verschließbar sind und dass jeder Deckel (3) in wenigstens zwei den Aufnahmeraum (2) verschließenden Deckelstellungen (13, 23) anordenbar ist und dass sich die Deckelstellungen (13, 23) in einer mittels des Kühlmittels (200) erzielbaren Kühlwirkung unterscheiden, sodass die Transportbox (11) durch die Wahl der Deckelstellungen (13, 23) wenigstens zwei verschiedene Möglichkeiten zur Temperierung bietet.

2. Transportbox (1) nach dem vorhergehenden Anspruch, **dadurch gekennzeichnet, dass** in der ersten Deckelstellung (13) der Aufnahmeraum (2) mittels wenigstens eines im Kühlmittelraum (33) aufgenommenen Kühlmittels (200) auf eine Tiefkühltemperatur kleiner -12 °C temperierbar ist.

3. Transportbox (1) nach einem der vorhergehenden Ansprüche, **dadurch gekennzeichnet, dass** in der zweiten Deckelstellung (23) der Aufnahmeraum (2) mittels wenigstens eines im Kühlmittelraum (33) aufgenommenen Kühlmittels (200) auf eine Frischhaltetemperatur über 0 °C und vorzugsweise zwischen 0 °C und 6 °C temperierbar ist.

4. Transportbox (1) nach einem der vorhergehenden Ansprüche, **dadurch gekennzeichnet, dass** zwischen den Aufnahmeräumen (2) wenigstens eine gemeinsam genutzte Seitenwandung (8) angeordnet ist, welche vorzugsweise eine Stärke von mehr als 70 mm aufweist.

5. Transportbox (1) nach einem der vorhergehenden Ansprüche, **dadurch gekennzeichnet, dass** die Aufnahmeräume (2) spiegelsymmetrisch ausgebildet sind.

6. Transportbox (1) nach einem der vorhergehenden Ansprüche, **dadurch gekennzeichnet, dass** die Deckel (3) jeweils wenigstens eine Griffmulde (43) aufweisen und dass die Griffmulde (43) als eine Aussparung an einer Ecke des Deckels (3) ausgebildet ist.

7. Transportbox (1) nach einem der vorhergehenden Ansprüche, **dadurch gekennzeichnet, dass** wenigstens eine vertiefte oder erhabene Siegelfläche (101) zum Anbringen eines Siegels vorgesehen ist und dass die Siegelfläche (101) durch wenigstens einen Teilabschnitt des Unterteils (11) und durch wenigstens einen Teilabschnitt eines Deckels (3) bereitgestellt wird.

8. Transportbox (1) nach einem der vorhergehenden Ansprüche, **dadurch gekennzeichnet, dass** der Deckel (3) in einer zweiten Deckelstellung (23) gegenüber einer ersten Deckelstellung (13) um eine vertikale Achse gedreht ist.

9. Transportbox (1) nach einem der vorhergehenden Ansprüche, **dadurch gekennzeichnet, dass** der Deckel (3) in einer zweiten Deckelstellung (23) gegenüber einer ersten Deckelstellung (13) um eine horizontale Achse gewendet ist.

10. Transportbox (1) nach einem der vorhergehenden Ansprüche, **dadurch gekennzeichnet, dass** dem Aufnahmeraum (2) wenigstens eine Auslassöffnung (7) zum Abführen des Kühlmittels (200) aus dem Aufnahmeraum (2) zugeordnet ist.

## Claims

1. Transport box (1), in particular for partially prepared meals and food, comprising at least one lower part (11) having at least one receiving space (2) limited by lateral walls (12) and at least one base (22), it being possible to seal the receiving space (2) by at least one cover (3) and the cover (3) having at least one coolant space (33) for receiving at least one coolant (200),
and wherein the lower part (11) has at least two receiving spaces (2), **characterized in that** the receiving spaces (2) can be sealed by at least one respective cover (3)
and that each cover (3) can be arranged in at least two cover positions (13, 23) sealing the receiving space (2) and that the cover positions (13, 23) differ in terms of a cooling effect that can be achieved by means of the coolant (200), such that the transport box (11) offers at least two different options for temperature control via the selection of the cover positions (13, 23).

2. Transport box (1) according to the preceding claim, **characterized in that**, in the first cover position (13), the temperature of the receiving space (2) can be controlled by means of at least one coolant (200) received in the coolant space (33) to a freezing temperature smaller than -12°C.

3. Transport box (1) according to any one of the preceding claims, **characterized in that**, in the second cover position (23), the temperature of the receiving space (2) can be controlled by means of at least one coolant (200) received in the coolant space (33) to a keep-fresh temperature above 0°C and preferably between 0°C and 6°C.

4. Transport box (1) according to any one of the preceding claims, **characterized in that** between the receiving spaces (2) there is arranged at least one shared lateral wall (8), which preferably has a thickness of more than 70 mm.

5. Transport box (1) according to any one of the preceding claims, **characterized in that** the receiving spaces (2) are configured in a mirror-symmetrical manner.

6. Transport box (1) according to any one of the preceding claims, **characterized in that** the covers (3) have at least one respective recessed grip (43) and that the recessed grip (43) is configured as a cutout at one corner of the cover (3).

7. Transport box (1) according to any one of the preceding claims, **characterized in that** at least one deepened or elevated sealing surface (101) for applying a sealing is provided and that the sealing surface (101) is provided by means of at least one partial section of the lower part (11) and by means of at least one partial section of a cover (3).

8. Transport box (1) according to any one of the preceding claims, **characterized in that** the cover (3), in a second cover position (23), is rotated about a vertical axis with respect to a first cover position (13).

9. Transport box (1) according to any one of the preceding claims, **characterized in that** the cover (3), in a second cover position (23), is turned about a horizontal axis with respect to a first cover position (13).

10. Transport box (1) according to any one of the preceding claims, **characterized in that** at least one outlet opening (7) for discharging the coolant (200) from the receiving space (2) is associated to the receiving space (2).

## Revendications

1. Caisse de transport (1), en particulier pour des plats et aliments partiellement préparés, comprenant au moins une partie inférieure (11) présentant au moins un espace de réception (2) limité par des parois latérales (12) et au moins une base (22), l'espace de réception (2) pouvant être scellé par au moins un couvercle (3) et le couvercle (3) présentant au moins un espace réfrigérant (33) pour recevoir au moins un réfrigérant (200),
et dans laquelle la partie inférieure (11) présente au moins deux espaces de réception (2), **caractérisée en ce que** les espaces de réception (2) peuvent être scellés par au moins un couvercle (3) respectif
et **en ce que** chaque couvercle (3) peut être agencé dans au moins deux positions de couvercle (13, 23) scellant l'espace de réception (2) et **en ce que** les positions de couvercle (13, 23) diffèrent en termes d'un effet de réfrigération qui peut être obtenu au moyen du réfrigérant (200), de telle sorte que la caisse de transport (11) offre au moins deux possibilités différentes de régulation de la température par le biais de la sélection des positions de couvercle (13, 23).

2. Caisse de transport (1) selon la revendication précédente, **caractérisée en ce que**, dans la première position de couvercle (13), la température de l'espace de réception (2) peut être régulée au moyen d'au moins un réfrigérant (200) reçu dans l'espace réfrigérant (33) à une température de congélation inférieure à -12 °C.

3. Caisse de transport (1) selon l'une quelconque des revendications précédentes, **caractérisée en ce que**, dans la seconde position de couvercle (23), la température de l'espace de réception (2) peut être régulée au moyen d'au moins un réfrigérant (200) reçu dans l'espace réfrigérant (33) à une température de maintien au frais supérieure à 0 °C et de préférence comprise entre 0 °C et 6 °C.

4. Caisse de transport (1) selon l'une quelconque des revendications précédentes, **caractérisée en ce qu'**entre les espaces de réception (2) est agencée au moins une paroi latérale commune (8), qui présente de préférence une épaisseur supérieure à 70 mm.

5. Caisse de transport (1) selon l'une quelconque des revendications précédentes, **caractérisée en ce que** les espaces de réception (2) sont configurés de manière symétrique-spéculaire.

6. Caisse de transport (1) selon l'une quelconque des revendications précédentes, **caractérisée en ce que** les couvercles (3) présentent au moins une poignée évidée (43) respective et **en ce que** la poignée évidée (43) est configurée comme une découpe au niveau d'un coin du couvercle (3).

7. Caisse de transport (1) selon l'une quelconque des revendications précédentes, **caractérisée en ce qu'**au moins une surface de scellage approfondie ou surélevée (101) pour appliquer un scellant est fournie et **en ce que** la surface de scellement (101) est fournie au moyen d'au moins une section partielle de la partie inférieure (11) et au moyen d'au moins une section partielle d'un couvercle (3).

8. Caisse de transport (1) selon l'une quelconque des revendications précédentes, **caractérisée en ce que** le couvercle (3), dans une seconde position de couverture (23), est tourné autour d'un axe vertical par rapport à une première position de couvercle (13).

9. Caisse de transport (1) selon l'une quelconque des revendications précédentes, **caractérisée en ce que** le couvercle (3), dans une seconde position de couverture (23), est tourné autour d'un axe horizontal par rapport à une première position de couvercle (13).

10. Caisse de transport (1) selon l'une quelconque des revendications précédentes, **caractérisée en ce qu'**au moins une ouverture de sortie (7) pour évacuer le réfrigérant (200) de l'espace de réception (2) est associée à l'espace de réception (2).
